# EUROPEAN PATENT APPLICATION

(11) **EP 4 807 662 A1**
(43) Date of publication of application: **16.09.2026**
(21) Application number: 25163932.4
(22) Date of filing: 14.03.2025
(51) Int. Cl.: G06T 5/20, G06T 5/94, G06T 7/11, G06T 7/90, G06T 5/77

(54) **APPLYING COLOUR VISION DEFICIENCY CORRECTIONS TO AN IMAGE**

(71) Applicant: British Telecommunications public limited company, London E1 8EE (GB)
(72) Inventor: MASTERSON, Elena Laurie, London, E1 8EE (GB)
(74) Representative: British Telecommunications public limited company Intellectual Property Department

(57) **Abstract**

There is provided a computer-implemented method for applying a Colour Vision Deficiency (CVD) correction to an image. The method comprises: receiving an input comprising the image; identifying a pair of objects in the image, the pair of objects comprising a first object having a first colour and a second object having a second colour, the first colour and the second colour forming a confusing colour pair based on a type of CVD, the identifying including assigning a respective descriptor to each of the first object and the second object; selecting a CVD correction to apply to the pair of objects, the CVD correction being selected based on the respective descriptors of the first object and the second object; and applying the CVD correction to the pair of objects.

## Description

### FIELD

The present disclosure relates to applying Colour Vision Deficiency (CVD) corrections to an image.

### BACKGROUND

The traditional television production process, which delivers a single, uniform version of a program to all viewers, is evolving to enable more personalized viewing experiences. This personalization can include features such as selecting alternate audio tracks or accessing supplementary content.

Object-Based Media (OBM) refers to a media production, delivery, and consumption framework in which content is composed of distinct, customizable "objects." This approach allows for the easy creation of multiple program versions tailored to specific viewer needs, such as accommodating colourblind viewers.

### SUMMARY

Colour based image manipulation for improved colour discrimination for viewers with a Colour Vision Deficiency (CVD) does not exclusively require that all instances of target colours present in an image are corrected. The present inventors have realised that, in cases where target objects share colours with natural objects in the image such as the sky or foliage, where a user has a pre-defined expectation of colour, it is desirable to maintain the colour of the natural objects while altering the colour of the target objects as opposed to changing all instances of the target colour.

Aspects provided herein may be applied to cases where viewers with CVD have low differentiation between two or more conflictingly coloured objects of the same or different types. For example, in video game content, it is common to separate teams by colouring of clothing, player tags, or a coloured glow around a player's outline. For a CVD user this can cause an unfair disadvantage as they must rely on other, slower, markers to differentiate players such as visual differences in apparel. The aspects provided herein provide means for selecting and applying CVD corrections to specific object instances or groups of object instances (e.g., red-shirts, green-shirts) to allow other objects of the same colour to remain unaltered, thereby providing finer control over where CVD corrections are applied and yielding higher naturalness compared to conventional methods.

According to a first aspect, there is provided a computer-implemented method for applying a Colour Vision Deficiency (CVD) correction to an image. The method comprises: receiving an input comprising the image; identifying a pair of objects in the image, the pair of objects comprising a first object having a first colour and a second object having a second colour, the first colour and the second colour forming a confusing colour pair based on a type of CVD, the identifying including assigning a respective descriptor to each of the first object and the second object; selecting a CVD correction to apply to the pair of objects, the CVD correction being selected based on the respective descriptors of the first object and the second object; and applying the CVD correction to the pair of objects.

The input image may be a frame of a video sequence.

The CVD correction may comprise one or more actions selected from a group of actions consisting of: applying a graphic overlay at or proximate to the first object in the image; applying a graphic overlay at or proximate to the second object in the image; recolouring the first object; and recolouring the second object. An overlay may cover some or all of an object in the image.

Selecting the CVD correction may be further based on one or more features selected from a group of features consisting of: a total number of pixels occupied by the first object in the image; a total number of pixels occupied by the second object in the image; a total number of pixels in the image having the first colour; and/or a total number of pixels in the image having the second colour.

The assigning the respective descriptor to each of the first object and the second object may be performed using a machine learning model.

The identifying the pair of objects in the image may further comprise segmenting, by a segmentation model, the input image into a plurality of segments, each segment of the plurality of segments representing a respective object of a plurality of objects in the image, the plurality of objects comprising the pair of objects.

The step of identifying the pair of objects may further comprise: sorting the plurality of segments into a plurality of colour groups, each colour group of the plurality of colour groups defined as a region in CIE L*u*v* space; generating a list of group pairs, each group pair comprising a respective first colour group from the plurality of colour groups and a respective second colour group from the plurality of colour groups; assigning each group pair with a confusion score indicative of a degree of confusion between the respective first colour group and the respective second colour group based on the type of CVD, the assigning including: calculating an angle between a centroid of the first group and a centroid of the second group, the angle being calculated with respect to a confusion point in CIE L*u*v* space, the confusion point being determined by the type of CVD; and assigning the confusion score based on the calculated angle. The first colour of the first object and the second colour of the second object may belong to a group pair having a confusion score greater than a threshold value.

The sorting of the plurality of segments into the plurality of colour groups may comprise applying a k-means clustering algorithm on the plurality of segments.

The method may further comprise receiving an input of one or more descriptors of desired objects to be identified. The step of identifying the pair of objects may be based on the input. The input may be a user input.

The image may comprise a plurality of instances of the first object and/or a plurality of instances of the second object. The CVD correction may be applied to each instance of the first object and/or each instance of the second object.

The step of identifying the pair of objects may further comprise: generating a list of possible object pairs from the plurality of objects, each possible object pair comprising a respective first object and a respective second object; sorting the list of possible object pairs based on a likelihood of confusion between the respective first objects and the respective second objects based on the type of CVD; providing the sorted list of possible object pairs to a user; and receiving a user input corresponding to the identified pair of objects.

The method may further comprise: identifying a second pair of objects in the image, the second pair of objects comprising a third object having a third colour and a fourth object having a fourth colour, the third colour and the fourth colour forming a second confusing colour pair based on the type of CVD, the identifying including assigning a respective descriptor to each of the third object and the fourth object; selecting a second CVD correction to apply to the second object pair, the second CVD correction being selected based on the respective descriptors of the third object and the fourth object; and applying the second CVD correction to the second object pair. The second CVD correction may be different to the CVD correction.

According to a second aspect, there is provided a data processing system comprising a processor configured to: receive an input comprising an image; identify a pair of objects in the image, the pair of objects comprising a first object having a first colour and a second object having a second colour, the first colour and the second colour forming a confusing colour pair based on a type of CVD, the identifying including assigning a respective descriptor to each of the first object and the second object; select a CVD correction to apply to the pair of objects based on the respective descriptors of the first object and the second object; and apply the CVD correction to the pair of objects.

According to a third aspect, there is provided a computer program comprising instructions which, when the program is executed by a computer, cause the computer to carry out the method of any example in accordance with the first aspect.

According to a fourth aspect, there is provided a computer-readable data carrier having stored thereon the computer program in accordance with the third aspect.

### BRIEF DESCRIPTION OF THE FIGURES

Aspects of the present disclosure will now be described by way of example with reference to the accompanying figures. In the figures:
Figure 1 is a schematic illustration of an example data processing system (DPS) capable of performing any of the methods described herein;
Figure 2 is a process flowchart showing certain steps of method for applying a CVD correction to an image;
Figure 3 is a process flowchart showing certain further steps of the method depicted in Figure 2 according to an embodiment of the invention; and
Figure 4 is a process flowchart showing certain further steps of the method depicted in Figure 2 according to a further embodiment of the invention.

### DETAILED DESCRIPTION

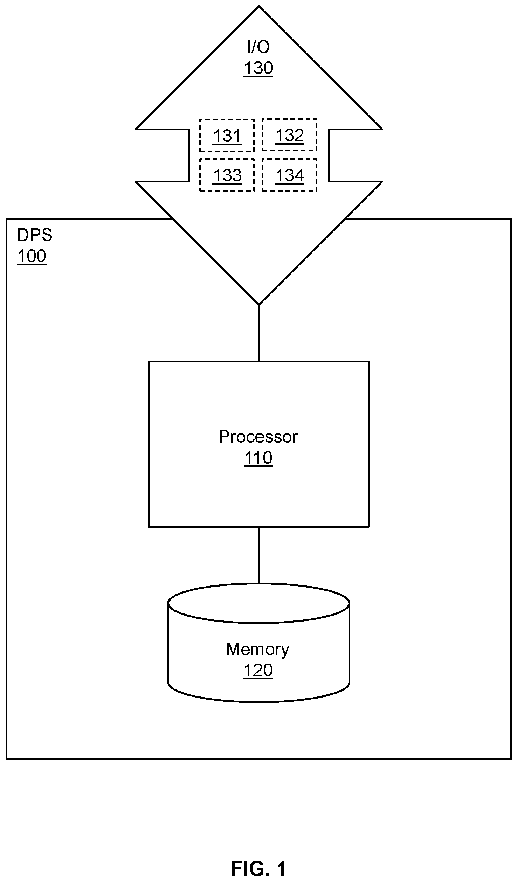

Figure 1 schematically illustrates an example data processing system (DPS) 100 capable of performing any of the methods described herein. It comprises a processor 110 operably coupled to both a memory 120 and an interface (I/O) 130.

The memory 120 can optionally comprise computer program instructions which, when the program is executed by the processor 110, cause the data processing system 100 to carry out any of the methods described herein. Alternatively, or additionally, the interface 130 can optionally comprise one or both of a physical interface 131 configured to receive a data carrier having such instructions stored thereon and a receiver 132 configured to receive a data carrier signal carrying such instructions.

The receiver 132, when present, can be configured to receive messages. It can comprise one or more wireless receiver modules and/or one or more wired receiver modules. The interface 130 can optionally comprise a transmitter 133 configured to transmit messages. The transmitter 133, when present, can comprise one or more wireless transmitter modules and/or one or more wired transmitter modules.

The interface 130 can optionally comprise one or more user interface devices 134.

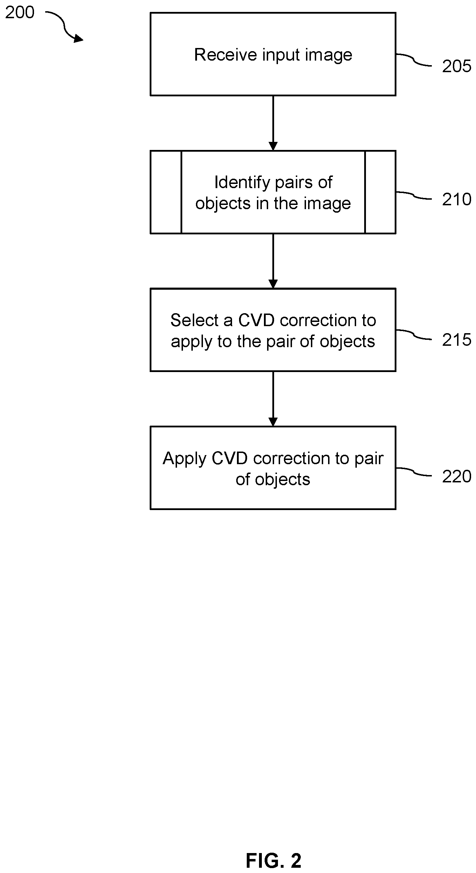

Figure 2 is a process flowchart depicting certain steps of an embodiment of a method 200 for applying a CVD correction to an image. The method 200 may be performed by the data processing system 100 as described above with reference to Figure 1.

At a first step 205, the data processing system 100 receives an input comprising the image. The image may be a frame of a video sequence.

At a second step 210, a pair of objects in the image is identified. The pair of objects comprises a first object having a first colour and a second object having a second colour. The first colour and the second colour form a confusing colour pair based on a type of CVD.

It will be appreciated that in certain colour spaces, such as the CIE 1976 L*, u*, v* colour space (CIE L*u*v*) and the CIE 1931 colour space, confusion points may be defined for different types of CVD (e.g., protanopia, deuteranopia, tritanopia). A confusing colour pair may consist of two colours having an angular separation with respect to a confusion point that is less than a threshold value.

It will further be appreciated that dichromacy lines may be defined for each type of CVD. As used herein, a dichromacy line represents the "slice" of colour that can be seen by people having a given form of colour-blindness. Confusion lines are lines in the colour space formed between a colour and a confusion point for a given type of CVD; these confusion lines show the projection of that colour to the dichromacy line. Confusion lines can show what colours can be confused because colours on the same confusion line will map to the same colour on the dichromacy line.

A confusing colour pair may alternatively be defined as two colours having a separation being less than a threshold separation when mapped to a dichromacy line for a type of CVD.

The second step 210 further comprises assigning a respective descriptor to each of the first object and the second object. The descriptors are labels that classify the respective objects (e.g., tree, leaf, plant, etc.). The descriptors may be assigned using an object recognition model (e.g., the Recognise Anything Model, RAM).

The second step 210 may further comprise generating a first object mask for the first object and a second object mask for the second object. As used herein, an "object mask" is a region within the image that isolates the object by marking its boundaries at a pixel-level.

At a third step 215, a CVD correction to apply to the pair of objects is selected. The CVD correction is selected based on the respective descriptors of the first object and the second object. A CVD correction may be a corrective effect applied to the image to replace the confusing colour pair with a non-confusing colour pair. Alternatively, or in addition, a CVD correction may be a marker (e.g., a visual tag) applied to the image to distinguish between the first object and the second object. A non-confusing colour pair may be a colour pair in which the angular separation between the colours with respect to the confusion point is greater than the threshold value, or may be a colour pair that have a separation that is greater than the threshold separation along a dichromacy line.

In this embodiment, the CVD correction comprises one or more actions selected from a group of actions consisting of: applying a graphic overlay at or proximate to the first object in the image, applying a graphic overlay at or proximate to the second object in the image, recolouring the first object, and recolouring the second object. An overlay may cover some or all of an object in the image. For example, an overlay having a different colour to an object mask may cover some or all of the object mask.

Alternatively, or in addition, an overlay may include a visual tag proximate to the object in the image. The visual tag may include symbols or words to distinguish between objects of different colours. For example, in video game content, a visual tag may be a tag above a player indicating the team to which the player belongs (e.g., by displaying the team's name). The visual tag may be separated from the object, for example, by a distance of up to 35% of the object's height in pixels. Alternatively, the visual tag may at least partially cover the object in the image.

In this embodiment, selecting the CVD correction may be further based on one or more features selected from a group of features consisting of: a total number of pixels occupied by the first object in the image, a total number of pixels occupied by the second object in the image, a total number of pixels in the image having the first colour, and a total number of pixels in the image having the second colour.

At a fourth step 220, the selected CVD correction is applied to the pair of objects.

The image may comprise a plurality of instances of the first object and/or a plurality of instances of the second object. The CVD correction may be applied to each instance of the first object and/or each instance of the second object.

Advantageously, identifying objects based on their descriptors tends to provide means to apply CVD corrections to specific classes of objects (i.e., objects having a specific descriptor). Furthermore, means to apply graphic overlays to object masks is provided.

In contrast, conventional methods for applying CVD corrections tend to rely solely on colour masks. For example, in an image containing a red team and a green team, conventional methods are commonly configured such that all image colours are altered, or only the green and red colour segments of the players are altered. Such methods can cause colours to be changed unnecessarily, or cause artefacts in the altered image due to areas of the players outside the selected colour ranges remaining unaltered, thereby providing an unnatural image and an undesirable viewing experience. Correction methods such as graphic overlays tend to be less likely to result in these artefacts as they can be applied specifically to the object masks instead of the colour masks, thereby improving pattern recognition.

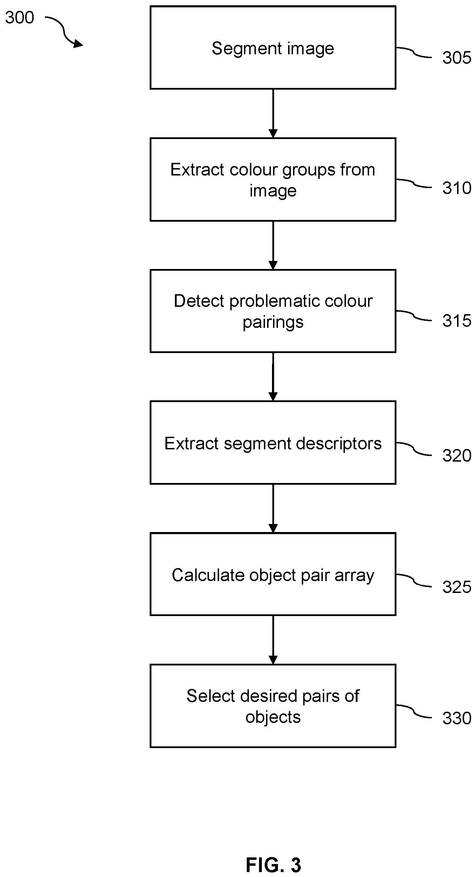

Figure 3 is a process flowchart showing certain steps of an example method 300 that may be used in the identifying step 210 shown in Figure 2. The method 300 may be performed by the data processing system 100 as described above with reference to Figure 1.

At a first step 305, a segmentation model (e.g., the Segment Anything Model, SAM) is applied to the image. The segmentation model segments the image into a plurality of segments, each of which represents an object or a coherent shape within the image.

At a second step 310, colour groups are extracted from the image. More specifically, the plurality of segments is sorted into a plurality of colour groups. A colour group may be defined as a region in a colour space. In this embodiment, the colour space is CIE L*u*v* space. The plurality of segments may be sorted into the plurality of colour groups by applying a k-means clustering algorithm to the plurality of segments. Advantageously, the CIE L*u*v* colour space provides a perceptually uniform colour space which tends to be more suitable for clustering algorithms.

Monochrome information may be filtered out before sorting the plurality of segments into colour groups. Monochrome information tends not to be problematic for viewers with CVD.

At a third step 315, problematic (i.e., confusing) colour pairings for viewers with a given type of CVD are determined. In this embodiment, a colour matrix is formed from the extracted colour groups, wherein each cell of the colour matrix represents a respective colour group pair (e.g., a red-green colour group pair). A confusion score may be assigned to each colour group pair to represent a degree of confusion the pair causes. Pairs are assigned with the confusion score based on an angle between the centroids of the colour groups in the CIE L*u*v* space. More specifically, the angle difference between the group centroids is calculated with respect to a confusion point in the CIE L*u*v* space, with the confusion point being determined by the type of CVD present. A greater angle between the group centroids is indicative of a lesser degree of confusion compared to a smaller angle.

At a fourth step 320, the plurality of segments is sorted into object groups by assigning a list of descriptors to each segment (e.g., tree, leaf, plant etc.). The descriptors may be assigned using an object tagging model (e.g., the Recognise Anything Model, RAM). Each object may have more than one tag assigned thereto (i.e., object groups are non-exclusive). It is preferable to use low confidence thresholds for object tagging to prevent tags being excluded.

At a fifth step 325, an object pair array is created. Each cell of the array represents a possible object pair comprising a respective first object and a respective second object (e.g., a pair comprising a red-shirt and green-grass). Based on the confusion scores, object descriptors, and/or object presence (i.e., a total number of pixels in the image occupied by instances of the respective first object and/or the respective second object) a sorted list is created, in which the object pairs are sorted based on a likelihood of confusion between the respective first objects and the respective second objects based on the type of CVD.

At a sixth step 330, a desired object pair to apply a CVD correction to is selected. For example, suggestions may be provided to a user on possible object pairs to apply CVD corrections to (e.g., based on the sorted list). The user may select a desired object pair from the suggested object pairs. Alternatively, selection may be performed automatically by the data processing system 100. The selected pair comprises the first object and the second object as described above with reference to Figure 2.

In the above embodiments, a CVD correction is applied to a pair of objects comprising a first object and a second object. In other embodiments, however, a plurality of CVD corrections may be applied to a corresponding plurality of pairs of objects. In such embodiments, the user may select a plurality of desired object pairs from the suggested object pairs at the sixth step 330.

The methods described herein advantageously facilitate applying multiple colour correction effects across a singular image. For example, some problematically coloured objects in the image may receive a colour-altering based correction (e.g., recolouring the objects), and others may have overlays applied to them instead. Yet further, the methods described herein facilitate applying different CVD corrections depending on the object descriptor. This allows the user to apply, for example, a small correction across the entirety of a colour group pair (e.g. a red group and a green group), and a more dramatic correction to specific objects in the colour group pair for which greater distinction is preferred (e.g., red shirts and green shirts). Accordingly, the methods described herein enable different compensation for different object pairs.

In contrast, conventional methods tend to be limited to only being able to apply separate effects to separate colour groups. Alternatively, conventional methods may involve layering multiple colour corrections. However, such an approach can have adverse effects on the resulting image or negatively impact the image naturalness.

In the above embodiments, colour groups are defined as regions in CIE L*u*v* space. In other embodiments, however, colour groups may be defined as regions in a different colour space.

In the above embodiments, colour group pairs are assigned with the confusion score based on an angle between the centroids of the colour groups in CIE L*u*v* space. In other embodiments, however, the confusion score is assigned based on a different criterion. For example, the confusion score may be assigned based on a CVD simulation of the image, and a subsequent colour similarity comparison.

In the above embodiments, the desired object pairs are selected by a user. In other embodiments, however, the desired object pairs may be selected algorithmically. In such embodiments, object pairs having a confusion score greater than a threshold value may be selected. Alternatively, a pre-defined number of the object pairs may be selected from the sorted list of object pairs.

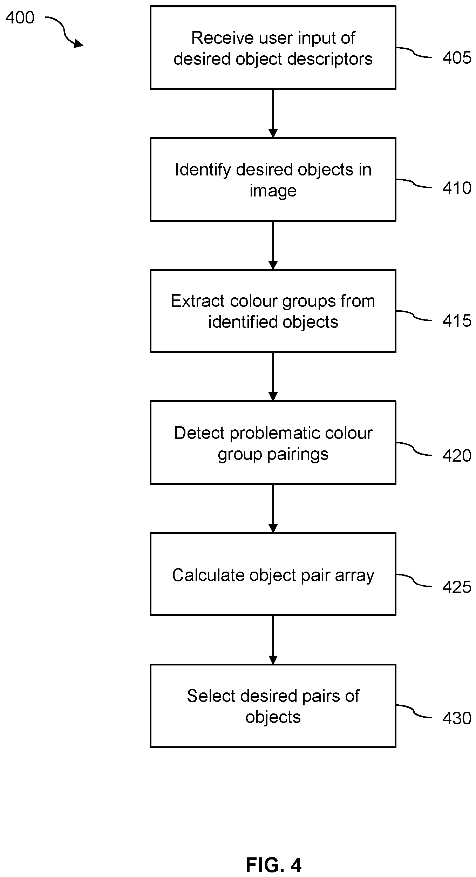

In the above embodiments, the segments are identified by the segmentation model and descriptors are subsequently assigned to the segments. In other embodiments, however, the segments are identified based on pre-defined desired descriptors (e.g., user-inputted descriptors). By way of example, Figure 4 is a process flowchart showing certain steps of an alternative method 400 that may be used in the identifying step 210 shown in Figure 2. The method 400 may be performed by the data processing system 100 as described above with reference to Figure 1.

At a first step 405, a user input of one or more desired descriptors for objects to be identified is received.

At a second step 410, objects that satisfy the desired descriptors are identified. More specifically, a promptable segmentation model (such as Grounding - DINO) is applied to the image. The promptable segmentation model is configured to segment the image into a plurality of segments. Each segment corresponds to an object mask with a corresponding descriptor from the user-inputted descriptors.

At a third step 415, colour groups are extracted from the identified objects. More specifically, the plurality of segments is sorted into a plurality of colour groups. The plurality of segments may be sorted into the plurality of colour groups by applying a k-means clustering algorithm to the plurality of segments.

At a fourth step 420, problematic colour pairings for viewers with a given type of CVD are determined. In this embodiment, a colour matrix is formed from the extracted colour groups, wherein each cell of the colour matrix represents a respective colour group pair (e.g., a red-green colour group pair). A confusion score may be assigned to each colour group pair to represent a degree of confusion the pair causes. Pairs are assigned with the confusion score based on an angle between the centroids of the colour groups in the CIE L*u*v* space. More specifically, the angle difference between the group centroids is calculated with respect to a confusion point in the CIE L*u*v* space, with the confusion point being determined by the type of CVD present. A greater angle between the group centroids is indicative of a lesser degree of confusion compared to a smaller angle.

At a fifth step 425, an object pair array is created. Each cell of the array represents a possible object pair comprising a respective first object and a respective second object (e.g., a pair comprising a red-shirt and green-grass). Based on the confusion scores, object descriptors, and/or object presence (i.e., a total number of pixels in the image occupied by instances of the respective first object and/or the respective second object) a sorted list is created, in which the object pairs are sorted based on a likelihood of confusion between the respective first objects and the respective second objects based on the type of CVD.

At a sixth step 430, a desired object pair to apply a CVD correction to is selected. For example, suggestions may be provided to the user on possible object pairs to apply CVD corrections to (e.g., based on the sorted list). The user may select a desired object pair from the suggested object pairs. The selected pair comprises the first object and the second object as described above with reference to Figure 2.

Advantageously, using a promptable segmentation model tends to benefit from faster processing as the identification of pairs of objects are limited to those having a set of user-identified descriptors. Accordingly, the object pair array calculation tends to be less resource intensive compared to processes where the full image is segmented.

Where this application lists one or more method steps, the presence of precursor, follow-on and intervening method steps is not excluded unless such exclusion is explicitly indicated. Similarly, where this application lists one or more components of a device or system, the presence of additional components, whether separate or intervening, is not excluded unless such exclusion is explicitly indicated.

In addition, where this application has listed the steps of a method or procedure in a specific order, it could be possible, or even expedient in certain circumstances, to change the order in which some steps are performed, and it is intended that the particular steps of the method or procedure claims set forth herein not be construed as being order-specific unless such order specificity is expressly stated in the claim. That is, the operations/steps may be performed in any order, unless otherwise specified, and embodiments may include additional or fewer operations/steps than those disclosed herein. It is further contemplated that executing or performing a particular operation/step before, partially or entirely contemporaneously with, or after another operation is in accordance with the described embodiments. For example, steps presented as occurring in series can, given appropriate means (e.g. parallel processors), be implemented in parallel, and vice-versa.

Insofar as embodiments of the invention described are implementable, at least in part, using a software-controlled programmable processing device, such as a microprocessor, digital signal processor or other processing device, data processing apparatus or system, it will be appreciated that a computer program for configuring a programmable device, apparatus or system to implement the foregoing described methods is envisaged as an aspect of the present invention. Such a computer program may be embodied as source code or undergo compilation for implementation on a processing device, apparatus or system or may be embodied as object code, for example.

Such a computer program may be encoded as executable instructions embodied in a carrier medium, non-transitory computer-readable storage device and/or a memory device in machine or device readable form, for example in volatile memory, non-volatile memory, solid-state memory, magnetic memory such as disk or tape, optically or magneto-optically readable memory such as magnetic tape, compact disk (CD), digital versatile disk (DVD) or other media that are capable of storing code and/or data. Such a computer program may alternatively or additionally be supplied from a remote source embodied in a communications medium such as an electronic signal, radio frequency carrier wave or optical carrier wave. Such carrier media are also envisaged as aspects of the present invention.

Such instructions, when executed by a processor (or one or more computers, processors, and/or other devices) may cause the processor (the one or more computers, processors, and/or other devices) to perform at least a portion of the methods described herein.

Where a processor is referred to herein, this is to be understood to refer to a single processor or multiple processors operably connected to one another. Similarly, where a memory is referred to herein, this is to be understood to refer to a single memory or multiple memories operably connected to one another.

The methods and processes can also be partially or fully embodied in hardware modules or apparatuses or firmware, so that when the hardware modules or apparatuses are activated, they perform the associated methods and processes. The methods and processes can be embodied using a combination of code, data, and hardware modules or apparatuses.

Examples of processing systems, environments, and/or configurations that may be suitable for use with the embodiments described herein include, but are not limited to, embedded computer devices, personal computers, server computers (specific or cloud (virtual) servers), hand-held or laptop devices, multiprocessor systems, microprocessor-based systems, set top boxes, programmable consumer electronics, mobile telephones, smartphones, tablets, network personal computers (PCs), distributed computing environments that include any of the above systems or devices, and the like. Hardware modules or apparatuses described in this disclosure include, but are not limited to, application-specific integrated circuits (ASICs), field-programmable gate arrays (FPGAs), dedicated or shared processors, and/or other hardware modules or apparatuses.

User devices can include, without limitation, static user devices such as PCs and mobile user devices such as smartphones, tablets, laptops, and smartwatches.

Receivers and transmitters as described herein may be standalone or may be comprised in transceivers. A communication link as described herein comprises at least one transmitter capable of transmitting data to at least one receiver over one or more wired or wireless communication channels. Wired communication channels can be arranged for electrical or optical transmission. Such a communication link can optionally further comprise one or more relaying transceivers.

User input devices can include, without limitation: microphones, buttons, keypads, touchscreens, touchpads, trackballs, joysticks, mice, gesture control devices and brain control (e.g. electroencephalography, EEG) devices. User output devices can include, without limitation: speakers, buzzers, display screens, projectors, indicator lights, haptic feedback devices and refreshable braille displays. User interface devices can comprise one or more user input devices, one or more user output devices, or both.

## Claims

1. A computer-implemented method for applying a Colour Vision Deficiency, CVD, correction to an image, the method comprising:
receiving an input comprising the image;
identifying a pair of objects in the image, the pair of objects comprising a first object having a first colour and a second object having a second colour, the first colour and the second colour forming a confusing colour pair based on a type of CVD, the identifying including assigning a respective descriptor to each of the first object and the second object;
selecting a CVD correction to apply to the pair of objects, the CVD correction being selected based on the respective descriptors of the first object and the second object; and
applying the CVD correction to the pair of objects.

2. The computer-implemented method of claim 1, wherein the input image is a frame of a video sequence.

3. The computer-implemented method of any preceding claim, wherein the CVD correction comprises one or more actions selected from a group of actions consisting of:
applying a graphic overlay at or proximate to the first object in the image;
applying a graphic overlay at or proximate to the second object in the image;
recolouring the first object; and
recolouring the second object.

4. The computer-implemented method of any preceding claim, wherein selecting the CVD correction is further based on one or more features selected from a group of features consisting of:
a total number of pixels occupied by the first object in the image;
a total number of pixels occupied by the second object in the image;
a total number of pixels in the image having the first colour; and/or
a total number of pixels in the image having the second colour.

5. The computer-implemented method of any preceding claim, wherein the assigning the respective descriptor to each of the first object and the second object is performed using a machine learning model.

6. The computer-implemented method of any preceding claim, wherein the identifying the pair of objects in the image further comprises:
segmenting, by a segmentation model, the input image into a plurality of segments, each segment of the plurality of segments representing a respective object of a plurality of objects in the image, the plurality of objects comprising the pair of objects.

7. The computer-implemented method of claim 6, wherein the step of identifying the pair of objects further comprises:
sorting the plurality of segments into a plurality of colour groups, each colour group of the plurality of colour groups defined as a region in CIE L*u*v* space;
generating a list of group pairs, each group pair comprising a respective first colour group from the plurality of colour groups and a respective second colour group from the plurality of colour groups;
assigning each group pair with a confusion score indicative of a degree of confusion between the respective first colour group and the respective second colour group based on the type of CVD, the assigning including:
calculating an angle between a centroid of the first group and a centroid of the second group, the angle being calculated with respect to a confusion point in CIE L*u*v* space, the confusion point being determined by the type of CVD; and
assigning the confusion score based on the calculated angle;
wherein
the first colour of the first object and the second colour of the second object belong to a group pair having a confusion score greater than a threshold value.

8. The computer-implemented method of claim 7, wherein sorting the plurality of segments into the plurality of colour groups comprises applying a k-means clustering algorithm on the plurality of segments.

9. The computer-implemented method of any preceding claim, further comprising receiving an input of one or more descriptors of desired objects to be identified, wherein the step of identifying the pair of objects is based on the input.

10. The computer-implemented method of any preceding claim, wherein the image comprises a plurality of instances of the first object and/or a plurality of instances of the second object, and wherein the CVD correction is applied to each instance of the first object and/or each instance of the second object.

11. The computer-implemented method of claim 5 or any claim dependent on claim 5, wherein the step of identifying the pair of objects further comprises:
generating a list of possible object pairs from the plurality of objects, each possible object pair comprising a respective first object and a respective second object;
sorting the list of possible object pairs based on a likelihood of confusion between the respective first objects and the respective second objects based on the type of CVD;
providing the sorted list of possible object pairs to a user; and
receiving a user input corresponding to the identified pair of objects.

12. The computer-implemented method of any preceding claim, further comprising:
identifying a second pair of objects in the image, the second pair of objects comprising a third object having a third colour and a fourth object having a fourth colour, the third colour and the fourth colour forming a second confusing colour pair based on the type of CVD, the identifying including assigning a respective descriptor to each of the third object and the fourth object;
selecting a second CVD correction to apply to the second object pair, the second CVD correction being selected based on the respective descriptors of the third object and the fourth object; and
applying the second CVD correction to the second object pair; wherein
the second CVD correction is different to the CVD correction.

13. A data processing system comprising a processor configured to:
receive an input comprising an image;
identify a pair of objects in the image, the pair of objects comprising a first object having a first colour and a second object having a second colour, the first colour and the second colour forming a confusing colour pair based on a type of CVD, the identifying including assigning a respective descriptor to each of the first object and the second object;
select a CVD correction to apply to the pair of objects based on the respective descriptors of the first object and the second object; and
apply the CVD correction to the pair of objects.

14. A computer program comprising instructions which, when the program is executed by a computer, cause the computer to carry out the method of any of claims 1 to 12.

15. A computer-readable data carrier having stored thereon the computer program of claim 14.
